# EUROPEAN PATENT SPECIFICATION

(11) **EP 3 885 165 B1**
(45) Date of publication and mention of the grant of the patent: **24.05.2023**
(21) Application number: 21161661.0
(22) Date of filing: 10.03.2021
(51) Int. Cl.: B60C 11/13, B60C 11/11, B60C 11/03

(54) **MOTORCYCLE TIRE FOR RUNNING ON ROUGH TERRAIN**
MOTORRADREIFEN ZUM FAHREN AUF UNEBENEM GELÄNDE
PNEU DE MOTOCYCLETTE POUR TERRAINS ACCIDENTÉS

(30) Priority: 24.03.2020 JP 2020053038
(43) Date of publication of application: 29.09.2021
(73) Proprietor: Sumitomo Rubber Industries, Ltd., Kobe-shi, Hyogo-ken 651-0072 (JP)
(72) Inventor: HIKITA, Masahiro, Kobe-shi, Hyogo 651-0072 (JP)
(74) Representative: Manitz Finsterwald Patent- und Rechtsanwaltspartnerschaft mbB

(56) References cited:
- EP-A1- 3 375 632
- DE-U1-202004 006 512
- JP-A- H02 175 305
- JP-A- S55 136 608

## Description

### [Technical Field]

The present invention relates to a motorcycle tire for running on rough terrain.

### [Background Art]

JP 2016-060347 A has proposed a pneumatic tire for motorcycles for running on rough terrain with convex portions on crown block. Each of the convex portions protrudes from a block main body of a respective one of the crown blocks toward a toe side in a rotational direction of the tire. The convex portions increase edge components in a tire circumferential direction. Further, the convex portions support the crown blocks on the toe side to prevent excessive collapse of the crown blocks in the tire circumferential direction and provide large traction.

JP S55-136608 A, JP H02-175305 A, EP 3 375 632 A1 and DE 20 2004 006 512 U1 respectively disclose motorcycle tires that have finned blocks of different designs formed on their tread surface.

### [Summary of the Invention]

### [Problems to be solved by the Invention]

In recent years, with the improvement of vehicle performance, further improvement of traction performance and cornering performance is desired. As a result of various studies on this point, the inventors found that the traction performance and the cornering performance could be further improved by improving the finned blocks, which led to the completion of the present invention.

The present invention was made in view of the above, and a primary object thereof is to provide a motorcycle tire for running on rough terrain capable of exerting excellent traction performance and cornering performance.

### [Means for Solving the Problems]

The present invention is a motorcycle tire for running on rough terrain having a tread portion, the tread portion including a base surface and a plurality of blocks protruding outward in a tire radial direction from the base surface, the plurality of the blocks includes at least one finned block, the finned block includes a block main body and at least one fin portion extending in a tire circumferential direction with a width in a tire axial direction smaller than a length in the tire axial direction of the block main body, and in the finned block, at least the fin portion is connected to the base surface via a first base portion that has a locally increased cross-section taken along the base surface.

In the motorcycle tire for running on rough terrain according to the present invention, it is preferred that the block main body of the finned block is connected to the base surface via a second base portion having a locally increased cross-section taken along the base surface.

In the motorcycle tire for running on rough terrain according to the present invention, it is preferred that the first base portion and the second base portion are provided so as to continuously surround an outer periphery of the finned block.

In the motorcycle tire for running on rough terrain according to the present invention, it is preferred that a raised height of the first base portion is 5% or more and 50% or less of a total height of the finned block.

In the motorcycle tire for running on rough terrain according to the present invention, it is preferred that the first base portion includes an outer surface extending along the base surface, and an intersection angle between a side surface of the finned block and the outer surface is 90 degrees or more and 130 degrees or less.

In the motorcycle tire for running on rough terrain according to the present invention, the first base portion has a stepwise contour in a lateral cross section taken orthogonal to the base surface.

In the motorcycle tire for running on rough terrain according to the present invention, it is preferred that a protrusion width of the first base portion from the finned block along the base surface is smaller than the width in the tire axial direction of the fin portion.

In the motorcycle tire for running on rough terrain according to the present invention, it is preferred that the tread portion is bound with an intended rotational direction of the tire, and the fin portion is provided on a toe side in the tire rotational direction of the block main body.

In the motorcycle tire for running on rough terrain according to the present invention, it is preferred that the finned block includes a first fin portion arranged on one side in the tire axial direction and a second fin portion arranged on the other side in the tire axial direction.

In the motorcycle tire for running on rough terrain according to the present invention, it is preferred that the first fin portion is connected with a side surface arranged on one side in the tire axial direction of the block main body, and the second fin portion is connected with a side surface arranged on the other side in the tire axial direction of the block main body.

In the motorcycle tire for running on rough terrain according to the present invention, it is preferred that the fin portion includes a third fin portion provided between the first fin portion and the second fin portion.

### [Effects of the Invention]

The motorcycle tire for running on rough terrain of the present invention can exert excellent traction performance and cornering performance by employing the above configuration.

### [Brief Description of the Drawings]

[Figure 1] a lateral cross-sectional view showing a motorcycle tire for running on rough terrain according to an embodiment of the present invention.
[Figure 2] a development view of a tread pattern of a tread portion of Figure 1.
[Figure 3] an enlarged perspective view of the finned block of Figure 2.
[Figure 4] an enlarged plan view of the finned block of Figure 2.
[Figure 5] a cross-sectional view taken along B-B line of Figure 4.
[Figure 6] an enlarged plan view of a crown block and middle blocks according to another embodiment of the present invention.
[Figure 7] a development view of the tread portion of a motorcycle tire for running on rough terrain in Reference.

### [Mode for carrying out the invention]

An embodiment of the present invention will now be described in conjunction with accompanying drawings.

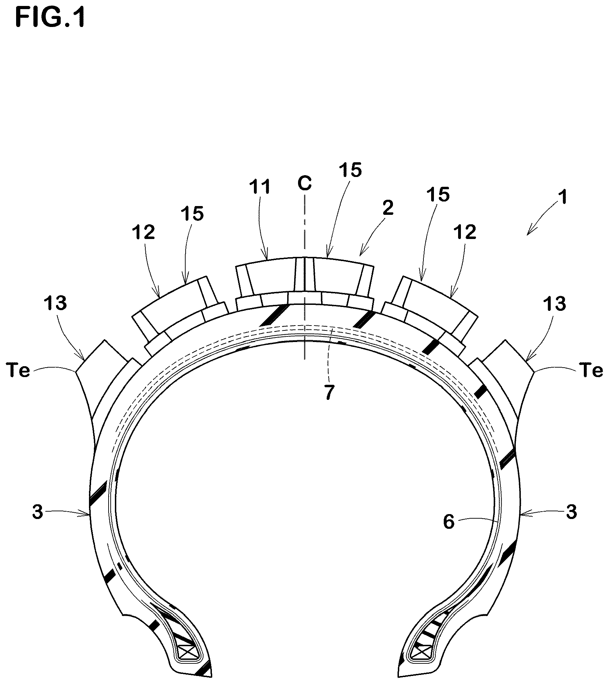

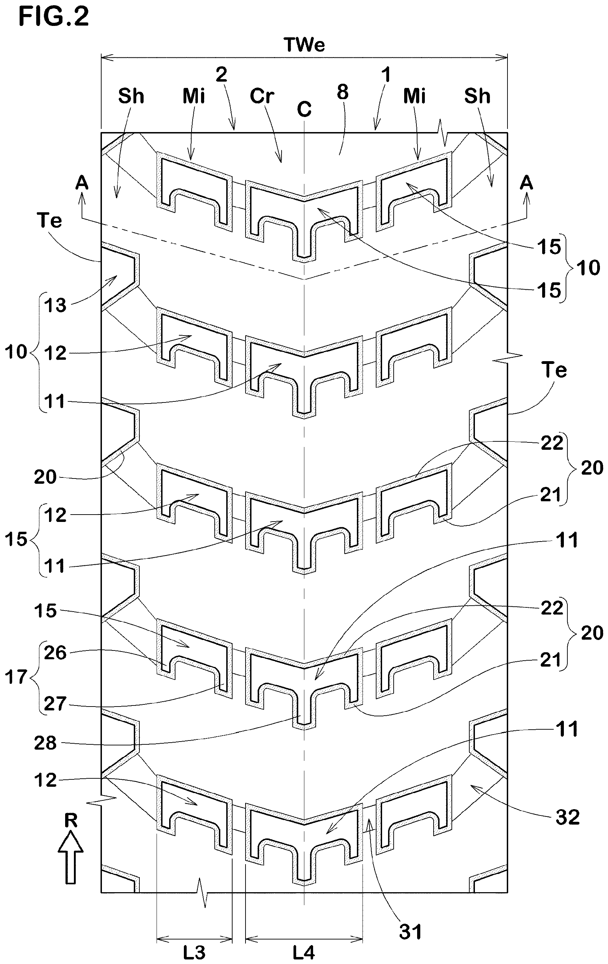

Figure 1 shows a lateral cross-sectional view of a motorcycle tire for running on rough terrain (hereinafter may be referred to simply as "tire") 1, which represents an embodiment of the present invention, in a standard state. Figure 2 is a development view of a tread pattern of a tread portion 2 of the tire 1. Figure 1 is a cross-sectional view taken along A-A line of Figure 2, which is a tire meridian section passing through a tire rotational axis.

In the case of a tire for which various standards are defined, the "standard state" is a state in which the tire 1 is mounted on a standard rim, inflated to a standard inner pressure, and loaded with no tire load. In the case of a tire for which various standards are not defined, the standard state means a standard usage state according to the purpose of use of the tire and loaded with no tire load. In the present specification, unless otherwise specified, the dimensions and the like of various parts of the tire are values measured in the standard state. Further, if there is a slight difference in the dimensions of various parts of the tire depending on the measurement position, unless otherwise specified, each dimension shown in the present specification shall mean the median value between the minimum value and the maximum value. Furthermore, each configuration described herein shall allow for normal errors contained in rubber molded products.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in Figure 1, the tire 1 of the present invention is suitably used as a tire for motocross competition, for example. The tire of the present embodiment of the invention is suitably used as a tire for a rear wheel of a motocross vehicle, for example. In the cross section of the tread portion 2 of the tire 1 of the present embodiment, an outer surface thereof is curved in an arc shape convex outward in a tire radial direction.

The tire 1 of the present embodiment of the invention is provided with a carcass 6 and a tread reinforcing layer 7, for example. Known configurations are appropriately adopted for these.

As shown in Figure 2, the tread portion 2 includes a directional pattern in which a rotational direction (R) is specified, for example. The rotational direction (R) is displayed in letters or symbols on sidewall portions 3 (shown in Figure 1), for example. It should be noted that in some of the figures herein, the rotational direction (R) is indicated by an arrow.

The tread portion 2 is divided into a crown region (Cr), middle regions (Mi), and shoulder regions (Sh), for example.

The crown region (Cr) is a region centered on a tire equator (C) and having a width of 1/3 of a tread development width (TWe). The shoulder regions (Sh) are regions each having a width of 1/6 of the tread development width (TWe) from a respective one of tread edges (Te) toward the tire equator (C). The middle regions (Mi) are regions each between the crown region (Cr) and a respective one of the shoulder regions (Sh).

The tread development width (TWe) is a distance between the tread edges (Te) in a tire axial direction when the tread portion 2 is developed on a plane. The tread edges (Te) means axially outer edges of blocks included in block rows located axially outermost on both sides among the blocks arranged in the tread portion 2.

The tread portion 2 includes a base surface 8 and a plurality of blocks 10 protruding radially outward from the base surface 8. The blocks 10 of the present embodiment of the invention include a plurality of crown blocks 11, a plurality of middle blocks 12, and a plurality of shoulder blocks 13. In each of the crown blocks 11, a centroid of a ground contacting surface is located in the crown region (Cr). In a preferred embodiment of the invention, the crown blocks 11 are provided on the tire equator (C). In each of the middle blocks 12, the centroid of the ground contacting surface is located in one of the middle regions (Mi). Further, the middle blocks 12 are adjacent to the crown blocks 11. In each of the shoulder blocks 13, the centroid of the ground contacting surface is located in one of the shoulder regions (Sh). Further, the shoulder blocks 13 are adjacent to the middle blocks 12.

Each of widths in the tire axial direction of the crown blocks 11 is 20% or more and 30% or less of the tread development width (TWe), for example. Each of widths in the tire axial direction of the middle blocks 12 is 10% or more and 20% or less of the tread development width (TWe), for example. Each of widths in the tire axial direction of the shoulder blocks 13 is 8% or more and 15% or less of the tread development width (TWe), for example.

At least one of the plurality of the blocks 10 includes a finned block 15. In the present embodiment of the invention, the crown blocks 11 and the middle blocks 12 are configured as the finned blocks 15.

Further, at least some of the blocks 10 of the present embodiment of the invention are each connected via a base portion 20 of which cross section taken along the base surface 8 is locally increased. It should be noted that, in order to make it easy to recognize the base portions 20, the base portions 20 are shaded in a plan view of the blocks of the present specification.

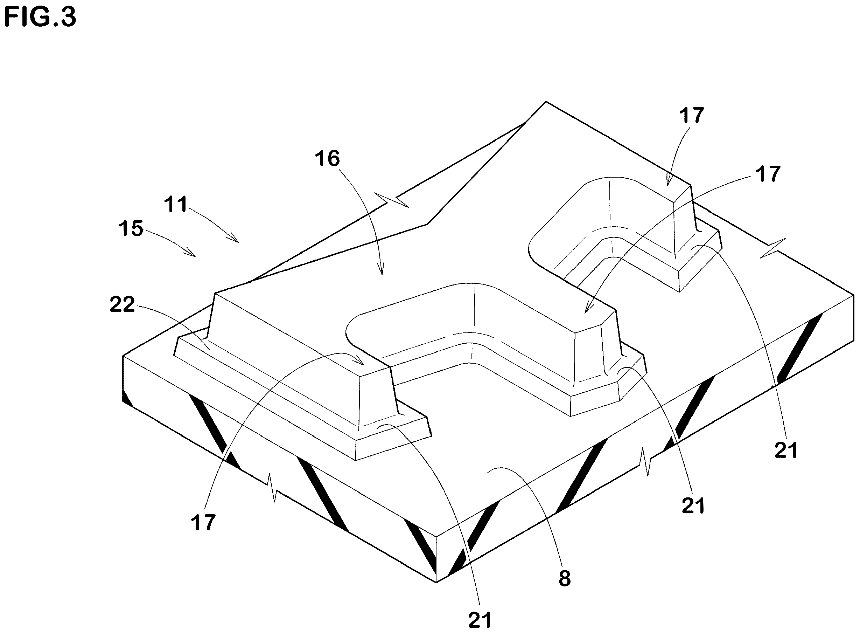

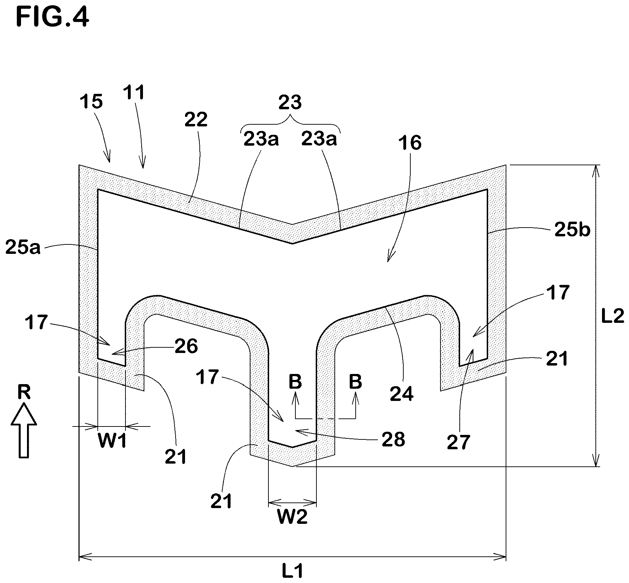

Figure 3 shows an enlarged perspective view of one of the finned blocks 15. Figure 4 shows an enlarged plan view of one of the finned blocks 15. It should be noted that the finned block 15 shown in Figure 3 and Figure 4 corresponds to one of the crown blocks 11 in the present embodiment of the invention.

As shown in Figure. 3 and Figure 4, each of the finned blocks 15 includes a block main body 16 and at least one fin portion 17 extending in the tire circumferential direction with a width in the tire axial direction smaller than that of the block main body 16.

In each of the finned blocks 15, at least the fin portion 17 is connected to the base surface 8 via a first base portion 21 that has a locally increased cross-section taken along the base surface 8.

The tire of the present invention can exert excellent traction performance and cornering performance by employing the above configuration. The following mechanisms can be inferred as reasons for this.

The tire 1 of the present invention suppresses the collapse in the tire circumferential direction of the blocks 10 by the fin portions 17. Therefore, the traction performance is improved. Further, the fin portions 17 include edges extending in the tire circumferential direction, therefore, they provide frictional force in the tire axial direction, thereby, they are helpful for improving the cornering performance.

Furthermore, in the present invention, the first base portions 21 increase rigidity of the fin portions 17, therefore, further improvement of the traction performance and the cornering performance can be expected.

If any one of the configurations described below is independently applied to the tire of the present invention having the above-mentioned characteristics, improvement in performance according to each configuration can be expected. Furthermore, when some of the configurations described below are applied in combination, combined improvement in the performance according to each configuration can be expected.

As shown in Figure 4, each of the finned blocks 15 of the present embodiment of the invention have a length (L2) in the tire circumferential direction smaller than a length (L1) in the tire axial direction, for example. Specifically, it is preferred that the length (L2) in the tire circumferential direction of each of the finned blocks 15 is 60% or more and 90% or less of the length L1 in the tire axial direction. The finned blocks 15 configured as such are helpful for improving the traction performance.

The block main body 16 includes a first side surface 23 facing the heel side in the rotational direction (R) (hereinafter, may be simply referred to as the "heel side") and a second side surface 24 facing the toe side in the rotational direction (R) (hereinafter, may be simply referred to as the "toe side"). The first side surface 23 is recessed toward the toe side, for example. The first side surface 23 of the present embodiment of the invention is composed of two planes (23a) which are inclined in opposite sides with respect to the tire axial direction and are connected via a ridge line, for example. An angle of each of the planes (23 a) with respect to the tire axial direction is 5 degrees or more and 25 degrees or less, for example. The first side surface 23 configured as such exerts a large reaction force when pushing away mud and soil during running on rough terrain.

The second side surface 24 includes a portion that extends along the above-described plane of the first side surface 23. Further, the second side surface 24 is connected to the fin portion 17. That is, the fin portion 17 is provided on the toe side in the rotational direction (R) of the block main body 16. The fin portion 17 configured as such effectively prevents the block from collapsing to the toe side, therefore, excellent traction performance is exerted.

A side surface (25a) on one side and a side surface (25b) on the other side in the tire axial direction of the block main body 16 extend parallel to the tire circumferential direction. The side surfaces configured as such generate a large reaction force in the tire axial direction during cornering and improve the cornering performance.

The finned blocks 15 of the present embodiment of the invention include a plurality of fin portions 17, for example. The finned block 15 (the crown block 11) shown in Figure 3 and Figure 4 has three fin portions 17. Specifically, each of the finned blocks 15 includes a first fin portion 26 arranged on one side in the tire axial direction, a second fin portion 27 arranged on the other side in the tire axial direction, and a third fin portion 28 arranged between them.

The first fin portion 26 is connected to the side surface (25a) arranged on one side in the tire axial direction of the block main body 16. The second fin portion 27 is connected to the side surface (25b) arranged on the other side in the tire axial direction of the block main body 16. The first fin portion 26 and the second fin portion 27 are configured to have substantially the same shape.

The third fin portion 28 is connected to the center portion in the tire axial direction of the block main body 16. In this embodiment of the invention, the crown blocks 11 are arranged on the tire equator (C), and the third fin portions 28 included in the crown blocks 11 are arranged on the tire equator (C). In a more preferred embodiment of the invention, the centroid of the ground contacting surface of each of these blocks is located within a region obtained by extending the third fin portion 28 parallel to the tire circumferential direction towards the heel side. As a result, the third fin portion 28 effectively suppresses the collapse of the block main body 16, therefore, excellent traction performance is exerted.

In order to ensure that the above effect is exerted, a length in the tire circumferential direction of the third fin portion 28 is larger than each of lengths in the tire circumferential direction of the first fin portion 26 and the second fin portion 27, for example. The third fin portion 28 protrudes more to the toe side than the first fin portion 26 and the second fin portion 27.

A width (W2) in the tire axial direction of the third fin portion 28 is larger than each of widths in the tire axial direction of the first fin portion 26 and the second fin portion 27, for example. Specifically, the width W2 of the third fin portion 28 is 130% or more and 200% or less of a width (W1) of the first fin portion 26, for example. Thereby, it is possible that mud and soil are prevented from being retained around the finned blocks 15 by the third fin portion 28 suppressing the collapse of the block main body 16 and the first fin portion 26 and the second fin portion 27 being deformed moderately.

The block main body 16 of each of the finned blocks 15 is connected to the base surface 8 (shown in Figure 2 and Figure 3, and the same applies hereinafter) via a second base portion 22 having a locally increased cross-section taken along the base surface 8. As a result, in the present embodiment of the invention, the first base portion 21 and the second base portion 22 are provided so as to continuously surround the outer periphery of the finned block 15.

The first base portion 21 and the second base portion 22 increase the rigidity of the root portion of the finned block 15, therefore, the traction performance and the cornering performance are improved effectively. In addition, the first base portion 21 and the second base portion 22 suppress the entire finned block 15 from being buried in the road surface on a soft road surface. Such an action can suppress an increase in the running resistance of the tire and can suppress the retention of mud and soil around the finned blocks 15.

It should be noted that the second base portion 22 has substantially the same configuration as the first base portion 21 at least in a cross section taken orthogonal to the base surface 8. Therefore, the configuration of the first base portion 21 described below can be applied to the second base portion 22.

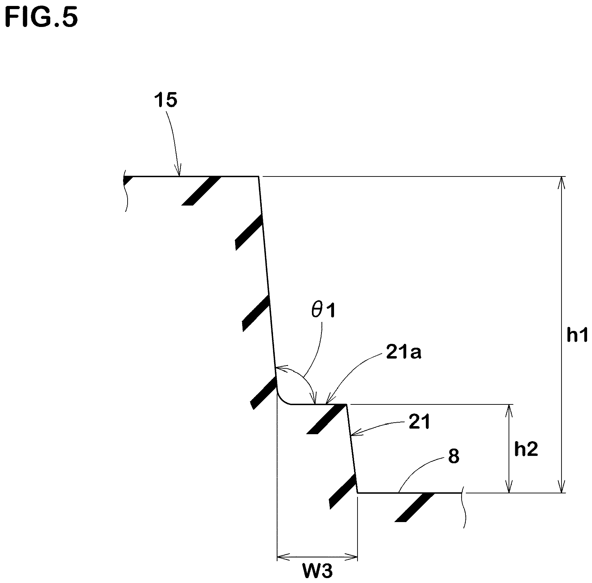

Figure 5 shows a cross-sectional view taken along B-B line of Figure 4. It should be noted that Figure 5 shows a lateral cross section of the first base portion 21 taken orthogonal to the base surface 8. As shown in Figure 5, the first base portion has a stepwise contour in the lateral cross section. It is preferred that the contour of the first base portion 21 has a stepwise shape having three or less steps, for example, and the contour of the first base portion 21 in the present embodiment has a stepwise shape having one step.

A raised height (h2) of the first base portion 21 is 5% or more and 50% or less, and preferably 5% or more and 15% or less, of a total height (h1) of each of the finned blocks 15. The first base portions 21 configured as such can increase the rigidity of the finned blocks 15 while maintaining the ease of sticking of the finned blocks 15 into the road surface.

It is preferred that a protrusion width (W3) of the first base portion 21 from the finned blocks 15 along the base surface 8 is smaller than a width in the tire axial direction of the fin portion 17 (shown in Figure 4). In the present embodiment of the invention, the protrusion width (W3) of the first base portion 21 is 50% or more and 80% or less of the width (W1) (shown in Figure 4) in the tire axial direction of the first fin portion 26. The first base portions 21 configured as such can increase the rigidity of the fin portions 17 without excessively impairing the sticking amount of the finned blocks 15 into the road surface.

The first base portion 21 includes an outer surface (21a) that extends along the base surface 8. An intersection angle θ1 between the side surface of the finned block 15 and the outer surface (21a) is 90 degrees or more and 130 degrees or less, and preferably 90 degrees or more and 100 degrees or less, for example. Thereby, it is made easier for the finned blocks to stick into the road surface, therefore, the traction performance and the cornering performance are improved.

As shown in Figure 2, the middle blocks 12 of the present embodiment of the invention are configured as the finned blocks 15. Each of the middle blocks 12 includes the first fin portion 26 arranged on one side in the tire axial direction and the second fin portion 27 arranged on the other side in the tire axial direction, for example. On the other hand, each of the middle blocks 12 does not have the third fin portion 28 described above. The middle blocks 12 configured as such are easier to be deformed moderately compared with the crown blocks 11, therefore, it is possible that mud and soil prevented from being retained around them.

Each of lengths in the tire circumferential direction of the first fin portion 26 and the second fin portion 27 of each of the middle blocks 12 is smaller than a length in the tire circumferential direction of the third fin portion 28 of each of the crown blocks 11. Each of the lengths in the tire circumferential direction of the first fin portion 26 and the second fin portion 27 of each of the middle blocks 12 is the same as each of lengths in the tire circumferential direction of the first fin portion 26 and the second fin portion 27 of each of the crown blocks 11. As a result, the change in traction during running straight and during cornering becomes linear.

A side surface of each of the middle blocks 12 facing the heel side in the rotational direction (R) is inclined toward the heel side as it goes from the tire equator (C) to a respective one of the tread edges (Te), for example. Further, the centroids on the ground contacting surfaces of the middle blocks 12 are located on the heel side of the centroids of the ground contacting surfaces of the crown blocks 11. Therefore, the middle blocks 12 guide the mud and soil that have been pushed away toward the tire equator (C) to the crown blocks 11, and these are further pushed away by the crown blocks 11. Thereby, the traction performance is further improved.

It is preferred that a length L3 in the tire axial direction of each of the middle blocks 12 is smaller than a length L4 (same as the length (L1) in the tire axial direction of the finned block 15 in Figure 4) in the tire axial direction of each of the crown blocks 11. Specifically, the length L3 of each of the middle blocks 12 is 50% or more and 80% or less of the length L4 of each of the crown blocks 11.

The shoulder blocks 13 of the present embodiment of the invention are configured as finless blocks which do not include the above-described fin portions 17, for example. The ground contacting surface of each of the shoulder blocks 13 is rectangular, preferably trapezoidal, for example. The ground contacting surface of each of the shoulder blocks 13 of the present embodiment includes two edges extending parallel to the tire circumferential direction. A length in the tire circumferential direction of each of the shoulder blocks 13 increases toward a respective one of the tread edges (Te). The rigidity of each of the shoulder blocks 13 configured as such increases toward a respective one of the tread edges (Te), therefore, the response when increasing a camber angle of the vehicle body can be linearized.

Each of the shoulder blocks 13 is provided on the base surface 8 side thereof with the base portion 20 in which the cross section taken along the base surface 8 is locally increased. The configuration of the first base portion 21 described above can be applied to this base portion 20. The shoulder blocks 13 configured as such have high rigidity at the root portions thereof, therefore, they are helpful for improving the cornering performance.

In each of the shoulder blocks 13 of the present embodiment of the invention, the base portion 20 is not provided on the side surface on the respective tread edge (Te) side, and the base portion 20 is provided in the other regions. Each of the shoulder blocks 13 configured as such are moderately flexible toward a respective one of the tread edges (Te), therefore, it is made easy for the driver to grasp the behavior of the vehicle body during cornering by the camber angle near the maximum camber angle.

The tread portion 2 includes crown tie bars 31 and shoulder tie bars 32, for example. In each of the crown tie bars 31, the base surface 8 is raised and each of the crown tie bars 31 connects one of the middle blocks 12 with one of the crown blocks 11 axially adjacent thereto. In each of the shoulder tie bars 32, the base surface 8 is raised and each of the shoulder tie bars 32 connects one of the shoulder blocks 13 and one of the middle blocks 12 axially adjacent thereto. Further, a height of each of the tie bars of the present embodiment of the invention is smaller than the height of each of the base portions 20 described above. In the present embodiment, a group of blocks connected by the tie bars work together to improve the traction performance.

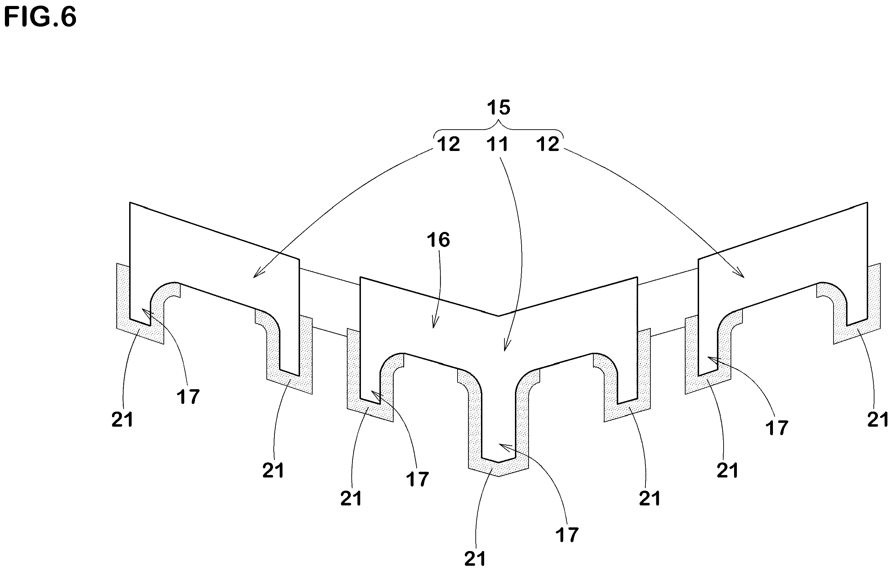

Figure 6 shows an enlarged plan view of one of the crown blocks 11 and the middle blocks 12 according to another embodiment of the present invention. As shown in Figure 6, the finned blocks 15 of the present invention may be provided with only the first base portions 21 and may not be provided with the second base portions, for example. The finned blocks 15 configured as such can increase the sticking amount of the block main bodies 16 into the road surface.

While detailed description has been made of preferred embodiments of the motorcycle tire for running on rough terrain according to the present invention, the present invention can be embodied within the scope of the claims.

### [Working examples (Examples)]

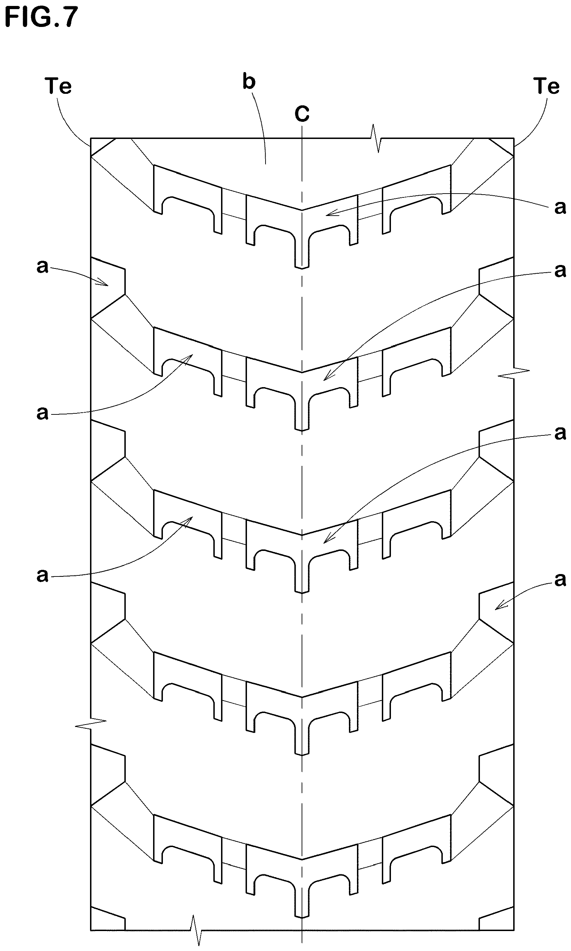

Motorcycle tires for running on rough terrain for rear wheels having the basic pattern shown in Figure 2 were made by way of test according to the specifications listed in Table 1. As Reference, as shown in Figure 7, a tire in which each of blocks (a) is connected to a base surface (b) without having a base portion therebetween were made by way of test. The tires in the Reference had substantially the same tread pattern as that shown in Figure 2, except for the above points. Each of the test tires was tested for the traction performance and the cornering performance. Common specifications and test methods for each test tire are as follows.
Vehicle used: Motocross competition vehicle with displacement of 450 cc
Tire size: 120/80-19
Rim size: 2.15WM
Tire inner pressure: 80 kPa
The test methods were as follows.

### < Traction performance >

While the above test vehicle was driven on rough terrain, the traction performance was evaluated by the test rider's feeling. The results are indicated by an evaluation point based on the Reference being 100, wherein the larger the numerical value, the better the traction performance is.

### < Cornering performance >

While the above test vehicle was driven on rough terrain, the cornering performance was evaluated by the test rider's feeling. The results are indicated by an evaluation point based on the Reference being 100, wherein the larger the numerical value, the better the cornering performance is.

The test results are shown in Table 1.

**Table 1**

| | Ref. | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Figure showing Tread pattern | Fig. 7 | Fig. 2 | Fig. 2 | Fig. 2 | Fig. 2 | Fig. 2 | Fig. 2 | Fig. 2 | Fig. 2 | Fig. 2 |
| Raised height (h2) of First base portion/ Total height (h1) of Block [%] | - | 7 | 5 | 10 | 15 | 20 | 7 | 7 | 7 | 7 |
| Intersection angle θ1 between Side surface of Block and First base portion [degree] | 95 | 95 | 95 | 95 | 95 | 95 | 90 | 110 | 120 | 130 |
| Traction performance [evaluation point] | 100 | 115 | 112 | 115 | 114 | 113 | 115 | 114 | 111 | 108 |
| Cornering performance [evaluation point] | 100 | 112 | 109 | 112 | 111 | 110 | 111 | 112 | 110 | 108 |

As shown in Table 1, it was confirmed that the tires in Examples showed excellent traction performance and the cornering performance.

### [Description of Reference Signs]

- 2: tread portion
- 8: base surface
- 10: block
- 15: finned block
- 16: block main body
- 17: fin portion
- 21: first base portion

## Claims

1. A motorcycle tire (1) for running on rough terrain comprising a tread portion (2), wherein
the tread portion (2) includes a base surface (8) and a plurality of blocks (10) protruding outward in a tire radial direction from the base surface (8),
the plurality of the blocks (10) includes at least one finned block (15),
the finned block (15) includes a block main body (16) and at least one fin portion (17) extending in a tire circumferential direction with a width (W1, W2) in a tire axial direction smaller than a length (L1) in the tire axial direction of the block main body (16), and
in the finned block (15), at least the fin portion (17) is connected to the base surface (8) via a first base portion (21) that has a locally increased cross-section taken along the base surface (8),
**characterized in that** the first base portion (21) has a stepwise contour in a lateral cross-section taken orthogonal to the base surface (8).

2. The motorcycle tire (1) according to claim 1, wherein
the block main body (16) of the finned block (15) is connected to the base surface (8) via a second base portion (22) having a locally increased cross-section taken along the base surface (8).

3. The motorcycle tire (1) according to claim 2, wherein
the first base portion (21) and the second base portion (22) are provided so as to continuously surround an outer periphery of the finned block (15).

4. The motorcycle tire (1) according to any one of claims 1 to 3, wherein
a raised height (h2) of the first base portion (21) is 5% or more and 50% or less of a total height (h1) of the finned block (15).

5. The motorcycle tire (1) according to any one of claims 1 to 4, wherein
the first base portion (21) includes an outer surface (21a) extending along the base surface (8), and
an intersection angle (θ1) between a side surface of the finned block (15) and the outer surface (21a) is 90 degrees or more and 130 degrees or less.

6. The motorcycle tire (1) according to any one of claims 1 to 5, wherein
a protrusion width (W3) of the first base portion (21) from the finned block (15) along the base surface (8) is smaller than the width (W1, W2) in the tire axial direction of the fin portion (17).

7. The motorcycle tire (1) according to any one of claims 1 to 6, wherein
the tread portion (2) is bound with an intended rotational direction (R) of the tire, and
the fin portion (17) is provided on a toe side in the tire rotational direction of the block main body (16).

8. The motorcycle tire (1) according to any one of claims 1 to 7, wherein
the finned block (15) includes a first fin portion (26) arranged on one side in the tire axial direction and a second fin portion (27) arranged on the other side in the tire axial direction.

9. The motorcycle tire (1) according to claim 8, wherein
the first fin portion (26) is connected with a side surface (25a) arranged on one side in the tire axial direction of the block main body (16), and
the second fin portion (27) is connected with a side surface (25b) arranged on the other side in the tire axial direction of the block main body (16).

10. The motorcycle tire (1) according to claim 8 or 9, wherein
the fin portion (17) includes a third fin portion (28) provided between the first fin portion (26) and the second fin portion (27).

## Patentansprüche

1. Motorradreifen (1) zur Fahrt auf unwegsamem Gelände, der einen Laufflächenabschnitt (2) umfasst, wobei
der Laufflächenabschnitt (2) eine Basisfläche (8) und eine Vielzahl von Blöcken (10) aufweist, die in einer Reifenradialrichtung von der Basisfläche (8) nach außen vorstehen,
die Vielzahl der Blöcke (10) mindestens einen gerippten Block (15) umfasst,
der gerippte Block (15) einen Blockhauptkörper (16) und mindestens einen Rippenabschnitt (17) umfasst, der sich in einer Reifenumfangsrichtung mit einer Breite (W1, W2) in einer Reifenaxialrichtung erstreckt, die kleiner ist als eine Länge (L1) in der Reifenaxialrichtung des Blockhauptkörpers (16), und
in dem gerippten Block (15) mindestens der Rippenabschnitt (17) mit der Basisfläche (8) über einen ersten Basisabschnitt (21) verbunden ist, der einen lokal vergrößerten Querschnitt entlang der Basisfläche (8) aufweist,
**dadurch gekennzeichnet, dass** der erste Basisabschnitt (21) in einem seitlichen Querschnitt, orthogonal zur Basisfläche (8) genommen, eine stufenförmige Kontur aufweist.

2. Motorradreifen (1) nach Anspruch 1, wobei der Blockhauptkörper (16) des gerippten Blocks (15) mit der Basisfläche (8) über einen zweiten Basisabschnitt (22) verbunden ist, der einen lokal vergrößerten Querschnitt, entlang der Basisfläche (8) genommen, aufweist.

3. Motorradreifen (1) nach Anspruch 2, wobei der erste Basisabschnitt (21) und der zweite Basisabschnitt (22) so vorgesehen sind, dass sie einen Außenumfang des gerippten Blocks (15) kontinuierlich umgeben.

4. Motorradreifen (1) nach einem der Ansprüche 1 bis 3, wobei eine Erhebungshöhe (h2) des ersten Basisabschnitts (21) 5 % oder mehr und 50 % oder weniger einer Gesamthöhe (h1) des gerippten Blocks (15) beträgt.

5. Motorradreifen (1) nach einem der Ansprüche 1 bis 4, wobei
der erste Basisabschnitt (21) eine Außenfläche (21a) umfasst, die sich entlang der Basisfläche (8) erstreckt, und
ein Schnittwinkel (θ1) zwischen einer Seitenfläche des gerippten Blocks (15) und der Außenfläche (21a) 90 Grad oder mehr und 130 Grad oder weniger beträgt.

6. Motorradreifen (1) nach einem der Ansprüche 1 bis 5, wobei eine Vorsprungsbreite (W3) des ersten Basisabschnitts (21) von dem gerippten Block (15) entlang der Basisfläche (8) kleiner ist als die Breite (W1, W2) in der Reifenaxialrichtung des Rippenabschnitts (17).

7. Motorradreifen (1) nach einem der Ansprüche 1 bis 6, wobei
der Laufflächenabschnitt (2) mit einer beabsichtigten Reifendrehrichtung (R) gebunden ist, und
der Rippenabschnitt (17) auf einer Zehenseite in der Reifendrehrichtung des Blockhauptkörpers (16) vorgesehen ist.

8. Motorradreifen (1) nach einem der Ansprüche 1 bis 7, wobei der gerippte Block (15) einen ersten Rippenabschnitt (26) umfasst, der auf einer Seite in der Reifenaxialrichtung angeordnet ist, und einen zweiten Rippenabschnitt (27), der auf der anderen Seite in der Reifenaxialrichtung angeordnet ist.

9. Motorradreifen (1) nach Anspruch 8, wobei
der erste Rippenabschnitt (26) mit einer Seitenfläche (25a) verbunden ist, die auf einer Seite in der Reifenaxialrichtung des Blockhauptkörpers (16) angeordnet ist, und
der zweite Rippenabschnitt (27) mit einer Seitenfläche (25b) verbunden ist, die auf der anderen Seite in der Reifenaxialrichtung des Blockhauptkörpers (16) angeordnet ist.

10. Motorradreifen (1) nach Anspruch 8 oder 9, wobei der Rippenabschnitt (17) einen dritten Rippenabschnitt (28) umfasst, der zwischen dem ersten Rippenabschnitt (26) und dem zweiten Rippenabschnitt (27) vorgesehen ist.

## Revendications

1. Pneumatique pour motocyclette (1) destiné à circuler en terrain accidenté, comprenant une portion formant bande de roulement (2), dans lequel la portion formant bande de roulement (2) inclut une surface de base (8) et une pluralité de blocs (10) se projetant vers l'extérieur dans une direction radiale du pneumatique depuis la surface de base (8),
la pluralité de blocs (10) incluent au moins un bloc à ailettes (15),
le bloc à ailettes (15) inclut un corps principal de bloc (16) et au moins une portion à ailettes (17) s'étendant dans une direction circonférentielle du pneumatique avec une largeur (W1, W2) dans une direction axiale du pneumatique plus petite qu'une longueur (L1) dans la direction axiale du pneumatique du corps principal de bloc (16), et
dans le bloc à ailettes (15), au moins la portion à ailettes (17) est connectée à la surface de base (8) via une première portion de base (21) qui a une section transversale localement augmentée, considérée le long de la surface de base (8),
**caractérisé en ce que** la première portion de base (21) a un contour en gradin dans une section transversale latérale considérée orthogonalement à la surface de base (8).

2. Pneumatique pour motocyclette (1) selon la revendication 1, dans lequel le corps principal de bloc (16) du bloc à ailettes (15) est connecté à la surface de base (8) via une seconde portion de base (22) ayant une section transversale localement augmentée considérée le long de la surface de base (8).

3. Pneumatique pour motocyclette (1) selon la revendication 2, dans lequel la première portion de base (21) et la seconde portion de base (22) sont prévues de manière à entourer en continu une périphérie extérieure du bloc à ailettes (15).

4. Pneumatique pour motocyclette (1) selon l'une quelconque des revendications 1 à 3, dans lequel
une hauteur de rehaussement (h2) de la première portion de base (21) est de 5 % ou plus et de 50 % ou moins d'une hauteur totale (h1) du bloc à ailettes (15).

5. Pneumatique pour motocyclette (1) selon l'une quelconque des revendications 1 à 4, dans lequel
la première portion de base (21) inclut une surface extérieure (21a) s'étendant le long de la surface de base (8), et
un angle d'intersection (θ1) entre une surface latérale du bloc à ailettes (15) et la surface extérieure (21a) est de 90 degrés ou plus et de 130 degrés ou moins.

6. Pneumatique pour motocyclette (1) selon l'une quelconque des revendications 1 à 5, dans lequel
une largeur de projection (W3) de la première portion de base (21) depuis le bloc à ailettes (15) le long de la surface de base (8) est plus petite que la largeur (W1, W2) dans la direction axiale du pneumatique de la portion à ailettes (17).

7. Pneumatique pour motocyclette (1) selon l'une quelconque des revendications 1 à 6, dans lequel
la portion formant bande de roulement (2) est liée à une direction de rotation par conception (R) du pneumatique, et
la portion à ailettes (17) est prévue sur un côté pointe dans la direction de rotation du pneumatique du corps principal de bloc (16).

8. Pneumatique pour motocyclette (1) selon l'une quelconque des revendications 1 à 7, dans lequel
le bloc à ailettes (15) inclut une première portion formant ailette (26) agencée sur un côté dans la direction axiale du pneumatique et une deuxième portion formant ailette (27) agencée sur l'autre côté dans la direction axiale du pneumatique.

9. Pneumatique pour motocyclette (1) selon la revendication 8, dans lequel
la première portion formant ailette (26) est connectée à une surface latérale (25a) agencée sur un côté dans la direction axiale du pneumatique du corps principal de bloc (16), et
la deuxième portion formant ailette (27) et connectée à une surface latérale (25b) agencée sur l'autre côté dans la direction axiale du pneumatique du corps principal de bloc (16).

10. Pneumatique pour motocyclette (1) selon la revendication 8 ou 9, dans lequel
la portion à ailettes (17) inclut une troisième portion formant ailette (28) prévue entre la première portion formant ailette (26) et la deuxième portion formant ailette (27).
